# EUROPÄISCHE PATENTSCHRIFT

(11) **EP 2 880 727 B1**
(45) Veröffentlichungstag und Bekanntmachung des Hinweises auf die Patenterteilung: **28.06.2017**
(21) Anmeldenummer: 13763204.8
(22) Anmeldetag: 06.09.2013
(51) Int. Cl.: H02B 1/54, F16F 15/02, F16F 15/023, F16F 7/14, H02G 7/14

(54) **DÄMPFUNGSANORDNUNG EINER SCHWINGFÄHIG GELAGERTEN ELEKTRISCHER ENERGIE ÜBERTRAGUNGSEINRICHTUNG**
DAMPING ARRANGEMENT OF A SWINGABLY MOUNTED ELECTRICAL-ENERGY TRANSMISSION DEVICE
SYSTÈME D'AMORTISSEMENT D'UN DISPOSITIF DE TRANSMISSION D'ÉNERGIE ÉLECTRIQUE MONTÉ DE MANIÈRE À POUVOIR OSCILLER

(30) Priorität: 24.09.2012 DE 102012217189
(43) Veröffentlichungstag der Anmeldung: 10.06.2015
(73) Patentinhaber: Siemens Aktiengesellschaft, 80333 München (DE)
(72) Erfinder: BACKE, Frank, 15806 Zossen (DE); BARTZ, Michael, 12627 Berlin (DE); HEINRICH, Ulf, 14482 Potsdam (DE); HOLLER, Helmut, 10178 Berlin (DE); KRAUSSE, Gunther, 95182 Döhlau (DE); PROSTE, Claude, F-78500 Sartrouville (FR); SCHMIED, Beat, CH-4563 Gerlafingen (CH); SZEPANSKI, Arkadius Peter, 96182 Reckendorf (DE); TEICHMANN, Jörg, 14624 Dallgow-Döberitz (DE); VON SECK, Achim, 96193 Wachenroth (DE)
(86) Internationale Anmeldenummer: PCT/EP2013/068450
(87) Internationale Veröffentlichungsnummer: WO 2014/044550

(56) Entgegenhaltungen:
- EP-A2- 0 077 042
- WO-A1-03/023251
- DE-A1- 10 326 625
- DE-B3-102008 017 926
- DE-U1- 29 514 924
- JP-A- 2000 253 521
- KR-B1- 100 991 972
- KR-B1- 101 134 503
- US-A- 3 794 277

## Beschreibung

Die Erfindung bezieht sich auf eine Dämpfungsanordnung einer schwingfähig gelagerten Elektroenergieübertragungseinrichtung mit einem Traggestell, welches über mehrere Dämpfungselemente mit zumindest einem insbesondere ortsfesten Widerlager verbunden ist.

Eine derartige Dämpfungsanordnung ist beispielsweise aus dem deutschen Gebrauchsmuster DE 295 14 924 U1 bekannt. Dort ist eine Baueinheit mit Schutzeinrichtung gegen Erdbeben beschrieben. Ein Überspannungsableiter der Baueinheit ist an einem vierarmigen Stützkörper abgestützt. Der vierarmige Stützkörper wiederum ist über vier Drahtseilfedern an einem Fundament gelagert. Die an der bekannten Dämpfungsanordnung vorgesehenen Dämpfungselemente ermöglichen ein Schwingen des dortigen Überspannungsableiters. Am Überspannungsableiter auftretende Kräfte können in den Dämpfungselementen in Wärme gewandelt werden. Die Dämpfungselemente dienen zum einen einem schwingfähigen Lagern des Überspannungsableiters sowie zum anderen einer Dämpfung einer Schwingung. Die bekannte Dämpfungsanordnung ist dazu ausgelegt, innerhalb eines schmalen Bandes auftretende Schwingungen zu dämpfen. Dies hat zur Folge, dass entweder energiearme Schwingungen gut gedämpft werden, wohingegen energiestarke Schwingungen nicht ausreichend gedämpft werden können oder umgekehrt. Auch eine stärkere oder schwächere Auslegung der Dämpfungselemente führt nicht zu einer Lösung des Problems, da entweder zu starke Schwingungen zugelassen werden oder andererseits eine zu steife Lagerung des Überspannungsableiters erfolgt. Aus der US 3 794 277 A ist eine Anordnung bekannt, zum Stützen von z. B. elektrischen Übertragungseinrichtungen, welche nach Erdbebenstößen eine gute Stützung der Übertragungseinrichtung ermöglicht. Unterschiedliche Dämpfungselemente stützen die Übertragungseinrichtung in verschiedene Richtungen ab, wobei jedes Dämpfungselement in eine Richtung wirkt. Eine stabile Stützung erfordert zumindest drei Dämpfungselemente, welche tetraederförmig angeordnet sind. Dabei erfolgt eine Stützung in unterschiedlichen Richtungen unterschiedlich stark.

Insofern ergibt sich als Aufgabe der Erfindung eine Dämpfungsanordnung anzugeben, welche Schwingungen innerhalb eines breiteren Bandes und in einer Vielzahl von Richtungen beherrscht.

Erfindungsgemäß wird diese Aufgabe bei einer Dämpfungsanordnung der eingangs genannten Art dadurch gelöst, dass ein erstes und ein zweites Dämpfungselement, welche voneinander abweichende Bemessungsdämpfungsraten bzw. abweichend bemessene Dämpfungsraten aufweisen und parallel wirkend, d. h. parallel angeordnet sind, das Traggestell mit einem Widerlager verbinden. Mehrere Dämpfungselemente sind längs einer Bahn verteilt angeordnet, wobei im Bahnverlauf erste und zweite Dämpfungselemente einander abwechseln.

Dämpfungselemente dienen einem Dämpfen einer Bewegung, um beispielsweise eine Schwingungsamplitude gedämpft auslaufen zu lassen. Derartige Dämpfungselemente können beispielsweise an einem Traggestell angeordnet sein, welches wiederum über die Dämpfungselemente mit zumindest einem insbesondere ortsfesten Widerlager verbunden ist. Unter einem Traggestell werden diejenigen Bauteile verstanden, welche zur Übertragung von Kräften, insbesondere Halte- und Stützkräften, am Gesamtsystem dienen. Beispielsweise können auch Gehäuse, Stützfüße, Streben usw., welche nicht unmittelbar mit den Dämpfungselementen verbunden sind, als Traggestell wirken. Als ortsfestes Widerlager können beispielsweise Fundamente genutzt werden. Das Traggestell dient der Ausbildung einer Plattform, um eine Elektroenergieübertragungseinrichtung zu positionieren und von der Elektroenergieübertragungseinrichtung ausgehende bzw. auf diese Elektroenergieübertragungseinrichtung einwirkende Kräfte aufzunehmen und in die Dämpfungselemente einzuleiten. Die Dämpfungselemente können beispielsweise in Form von Drahtseilfedern ausgebildet sein, die zum einen ein Schwingen des Traggestelles ermöglichen und zum anderen aufgrund der inneren Reibung eine Dämpfung einer Bewegung des Traggestelles herbeiführen. Die unterschiedlichen Bemessungsdämpfungsraten bewirken, dass die Intensität der Wandlung von kinematischer Energie in beispielsweise thermische Energie in den ersten und zweiten Dämpfungselementen voneinander abweicht. Mit anderen Worten arbeitet das erste Dämpfungselement verlustärmer als das zweite Dämpfungselement. Bei der Verwendung von Drahtseilfedern können diese unterschiedliche intrinsische Reibungen aufweisen, wodurch deren Bewegbarkeit (Kraft-Weg-Verhalten) vergleichbar ist, jedoch eine Energiewandlung unterschiedlich stark bei gleichartigen Bewegungen erfolgt. Ein ähnliches Verhalten kann beispielsweise bei der Nutzung von alternativen Dämpfungselementen erzielt werden. Durch die Verwendung unterschiedlicher Bemessungsdämpfungsraten sind zwei Gruppen von Dämpfungselementen gebildet, welche eine Bewegung unterschiedlich stark dämpfen. Die Dämpfungselemente können dabei zum einen einem Dämpfen einer Bewegung dienen, zum anderen können die Dämpfungselemente auch einem schwingfähigen Abstützen des Traggestells dienen. Insbesondere können die Dämpfungselemente das Traggestell gegenüber Widerlagern positionieren. Als solches können alle Dämpfungselemente oder nur die ersten oder nur die zweiten Dämpfungselemente auch einem Abstützen und Positionieren des Traggestells und damit der Elektroenergieübertragungseinrichtung dienen. Es kann jedoch auch vorgesehen sein, dass sämtliche erste und zweite Dämpfungselemente sowohl eine tragende Funktion erfüllen als auch eine Dämpfungswirkung auf das Traggestell relativ zu den Widerlagern bewirken.

Die Verwendung von Dämpfungselementen mit unterschiedlichen Bemessungsdämpfungsraten ermöglicht, beispielsweise während leichter Schwingungen des Traggestells lediglich die ersten Dämpfungselemente dämpfend wirken zu lassen, wohingegen die zweiten Dämpfungselemente erst bei einem Überschreiten einer bestimmten Auslenkung bzw. Frequenz einer Bewegung des Traggestells in einen Dämpfungsprozess wirksam eingebunden werden. Durch eine Parallelanordnung erster und zweiter Dämpfungselemente ist eine bedarfsweise Stabilisierung einer Bewegung des Traggestells und eine Stützung des Traggestells gegeben.

Unter einer Elektroenergieübertragungseinrichtung sind all diejenigen Einrichtungen zu verstehen, die einer Übertragung elektrischer Energie, beispielsweise über stromdurchflossene Phasenleiter dienen. Als Elektroenergieübertragungseinrichtung sind beispielsweise Leistungsschalter, Trennschalter, Erdungsschalter, Sammelschienenabschnitte, Überspannungsableiter, Stromwandler, Spannungswandler, Schaltanlagen usw. zu verstehen. Die Elektroenergieübertragungseinrichtungen können beispielsweise Einsatz im Hoch- und Mittelspannungsbereich finden.

Neben einem Abfangen von leichten Bewegungen über die Dämpfungselemente mit geringeren Bemessungsdämpfungsraten kann bei einem Auftreten von größeren Kräften, die zu verstärkten Bewegungen führen, das Dämpfungsverhalten an dem Traggestell durch die Dämpfungselemente mit höheren Bemessungsdämpfungsraten bestimmt werden.

Weiter kann vorteilhaft vorgesehen sein, dass zumindest das erste und/oder zumindest das zweite Dämpfungselement im Wesentlichen lineares Dämpfungsverhalten aufweist/aufweisen.

Ein lineares Dämpfungsverhalten ermöglicht eine annähernd proportionale Zunahme der Dämpfungswirkung mit zunehmender Auslenkung des Traggestells. Vorzugsweise sollte sich ein im Wesentlichen linearer Weg-Zeit-Verlauf einstellen. Die Nutzung von voneinander abweichenden Dämpfungskennlinien für das erste und das zweite Dämpfungselement führt zu einer resultierenden Dämpfungsrate am Traggestell. Der Linearitätsverlauf der resultierenden Dämpfungsrate kann eine vergrößerte Bandbreite einer linearen Dämpfungswirkung aufweisen. Bei Verwendung von Federanordnungen in den Dämpfungselementen sollten deren Kraft-Weg-Kennlinien annähernd gleich sein. Somit ist es möglich, Bewegungen parallel in das erste und das zweite Dämpfungselement einzuleiten. Lediglich die Dämpfung der Bewegung am ersten und zweiten Dämpfungselement verlaufen abweichend voneinander. So ist es beispielsweise möglich, das erste und das zweite Dämpfungselement zum Abstützen der Dämpfungsanordnung einzusetzen.

Abweichend kann jedoch auch vorgesehen sein, Dämpfungselemente mit abweichenden Kraft-Weg-Kennlinien zu verwenden, so dass sich eine resultierende Kraft-Weg-Kennlinie für das Gesamtsystem einstellt.

Eine weitere vorteilhafte Ausgestaltung kann vorsehen, dass mehrere Dämpfungselemente längs einer Bahn verteilt angeordnet sind, wobei im Bahnverlauf erste und zweite Dämpfungselemente einander abwechseln.

Eine Bahn kann verschiedenartige Bahnverläufe aufweisen. Beispielsweise kann eine Bahn linear gestreckt, gekrümmt oder auch in sich geschlossen, insbesondere kreisförmig verlaufen. Entlang eines Verlaufes der Bahn sind die verschiedenen Dämpfungselemente zu positionieren, wobei die Dämpfungselemente im Bahnverlauf einander abwechselnd angeordnet sein sollten. Somit ist es möglich, dass jeweils ein erstes oder ein zweites Dämpfungselement von zweiten bzw. ersten Dämpfungselementen flankiert ist. Entsprechend können sich die unterschiedlichen Bemessungsdämpfungsraten der ersten und der zweiten Dämpfungselemente entlang der Bahn verteilt überlagern. Somit ist sichergestellt, dass an dem Traggestell eine möglichst gleichmäßige Übertragung und Einleitung von Bewegungen des schwingfähigen Systems auf/in die Dämpfungselemente erfolgt. Damit können punktuelle Überlastungen an dem Traggestell vermieden werden.

Insbesondere bei der Verwendung eines in sich geschlossenen Bahnverlaufes, beispielsweise kreisförmig, rechteckförmig oder auch weitere polygonale Bahnverläufe, kann die Elektroenergieübertragungseinrichtung mit dem Traggestell zentral in einem von der Bahn umgriffenen Bereich positioniert sein. Somit ist ein allseitiges Bewegen um eine Vertikale bzw. ein Verkippen aus einer Vertikalen heraus in einfacher Weise gegeben. Beispielsweise kann vorgesehen sein, dass das Traggestell zentral einen Aufnahmebereich aufweist, von welchem radial nach außen verlaufend Tragstrecken, beispielsweise Tragarme angeordnet sind, an deren Enden sich die entsprechenden Dämpfungselemente befinden.

Es kann weiter vorteilhaft vorgesehen sein, dass das erste und das zweite Dämpfungselement die gleiche Bauart aufweisen.

Eine Nutzung gleicher Bauarten für die Dämpfungselemente ermöglicht, beispielsweise standardisierte Dämpfungselemente zu verwenden und diese bedarfsweise miteinander zu kombinieren und an der Dämpfungsanordnung zu verbauen. Gleiche Bauarten ermöglichen es, modulare Konstruktionen zu verwenden. Beispielsweise können sämtliche Dämpfungselemente in Form von Drahtseilfedern ausgeführt sein.

Weiterhin kann vorteilhaft vorgesehen sein, dass das erste und das zweite Dämpfungselement voneinander abweichende Bauarten aufweisen.

Die Verwendung unterschiedlicher Bauarten von Dämpfungselementen führt zu einer größeren Vielfalt bei der Abstimmung der unterschiedlichen Bemessungsdämpfungsraten. So ist es beispielsweise möglich, als erstes Dämpfungselement eine Drahtseilfeder einzusetzen und als zweites Dämpfungselement beispielsweise einen hydraulischen Dämpfer einzusetzen. Die Nutzung unterschiedlicher Bauformen ermöglicht weiter, beispielsweise nur die ersten Dämpfungselemente zu einem Lagern und Abstützen des Traggestells einzusetzen, wohingegen die zweiten Dämpfungselemente von Lagerkräften freigehalten sind und lediglich dämpfend bei Bewegungen wirken.

Weiterhin kann vorteilhaft vorgesehen sein, dass das erste und/oder das zweite Dämpfungselement nach Art eines Reibungsdämpfers wirkt/wirken.

Reibungsdämpfer weisen einen vergleichsweise einfachen Aufbau auf, da Relativbewegungen durch Reibungsverluste gedämpft werden. Als Reibungsdämpfer sind beispielsweise Blattfedern, Elastomerfedern, Schraubenfedern oder auch Drahtseilfedern einsetzbar. Derartige Reibungsdämpfer sind vergleichsweise Verschleißarm und bedürfen kaum einer Wartung.

Eine weitere vorteilhafte Ausgestaltung kann vorsehen, dass das erste und/oder das zweite Dämpfungselement nach Art eines hydraulischen Dämpfers wirkt/wirken.

Die Verwendung von hydraulischen Dämpfern ermöglicht es, das Dämpfungsverhalten der Dämpfungsanordnung in einem feineren Bereich abzustimmen. Vorzugsweise sollten die zweiten Dämpfungselemente, also die Dämpfungselemente die eine größere Bemessungsdämpfungsrate aufweisen, mit einem annähernd linearen Dämpfungsverhalten ausgestattet sein. Dies sollte unabhängig von der Bauart des Dämpfungselementes vorgesehen sein.

Eine weitere vorteilhafte Ausgestaltung kann vorsehen, dass das erste und/oder das zweite Dämpfungselement nach Art eines pneumatischen Dämpfers wirkt/wirken.

Die Nutzung von Gasen zur Erzeugung von Dämpfungskräften ermöglicht massearme Dämpfungselemente bei hohen Dämpfungskräften.

Hydraulische und pneumatische Dämpfer aufweisende Dämpfungselemente sollten bevorzugt lediglich einem Dämpfen einer Bewegung dienen und von Stütz- und Haltekräften des Traggestells befreit sein.

Eine weitere vorteilhafte Ausgestaltung kann vorsehen, dass das Dämpfungselement mit der geringeren Bemessungsdämpfungsrate das Traggestell abstützt.

Dämpfungselemente mit der geringeren Bemessungsdämpfungsrate können das Traggestell gegenüber einem Widerlager abstützen. Somit ist ein System gegeben, welches bei energiearmen Bewegungen am Traggestell Kräfte in das Widerlager einleitet. Zusätzliche Haltemechaniken, welche das Traggestell gegenüber dem Widerlager positionieren, sind so nicht von Nöten. Vielmehr kann das erste Dämpfungselement bzw. die Gruppe von ersten Dämpfungselementen mit einer geringeren Bemessungsdämpfungsrate eine Stützfunktion und Haltefunktion für das Traggestell ausüben.

Das Dämpfungselement oder die Gruppe von Dämpfungselementen, die eine höhere Bemessungsdämpfungsrate haben, können jedoch unterstützend bei der Abstützung des Traggestells Verwendung finden. Beispielsweise können Drahtseilfedern eingesetzt werden, welche unterschiedliche Dämpfungsraten aufweisen. Dies ist beispielsweise dadurch möglich, dass verschiedenartige Verseilarten/Drähte unterschiedlicher Materialien miteinander verseilt werden oder die Oberflächenstruktur der verseilten Drähte unterschiedliche Reibungskoeffizienten aufweisen, so dass verschiedene Dämpfungsverhalten bei ähnlichen Schwingungsverhalten gegeben sind. Unterschiedliche Reibungskoeffizienten können erreicht werden durch Oberflächenbeschichtungen wie beispielsweise Verzinken oder galvanischen Oberflächenschutz.

Im Folgenden wird ein Ausführungsbeispiel der Erfindung schematisch in einer Zeichnung gezeigt und nachfolgend näher beschrieben. Dabei zeigt die
- Figur 1: eine Ansicht einer Dämpfungsanordnung mit einem Traggestell, die
- Figur 2: eine Ansicht einer Drahtseilfeder, die
- Figur 3: eine Draufsicht auf das aus der Figur 1 bekannte Traggestell.

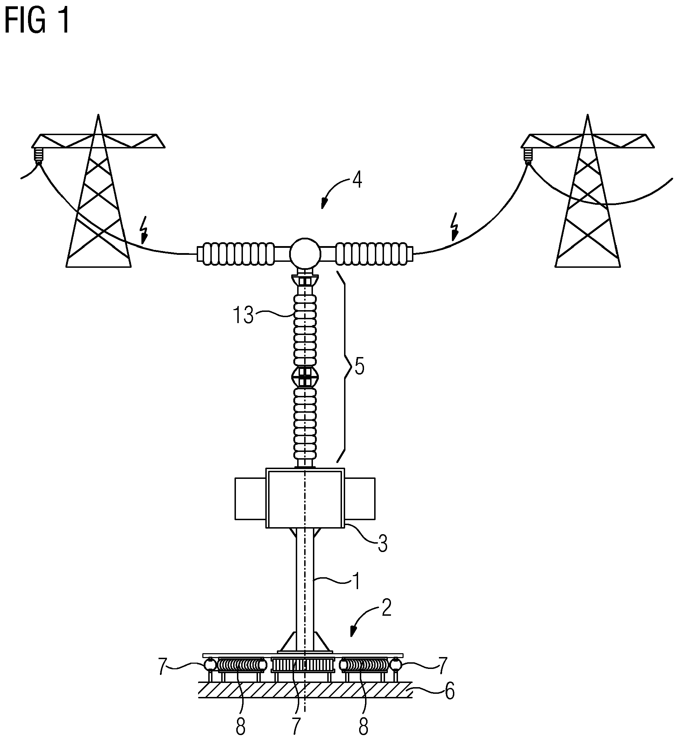

Die Figur 1 zeigt eine seitliche Ansicht einer Elektroenergieübertragungseinrichtung. Die Elektroenergieübertragungseinrichtung ist mit einem Stiel 1 ausgestattet. Der Stiel 1 ist Teil eines Traggestells 2. Eine Antriebseinrichtung 3 ist am Stiel 1 abgestützt. Die Antriebseinrichtung 3 ist in einem vor Witterungseinflüssen schützenden Gehäuse untergebracht. Die Antriebseinrichtung 3 dient dem Antreiben von relativ zueinander bewegbaren Schaltkontaktstücken einer Unterbrechereinheit eines Leistungsschalters 4. Der Leistungsschalter 4 weist einen Sockel mit einem Säulenisolator 5 auf, welcher sich an dem Ende des Stieles 1 abstützt, an welchem die Antriebseinrichtung 3 angeordnet ist. Der Säulenisolator 5 ist hohl ausgeführt, so dass eine Übertragung einer von der Antriebseinrichtung 3 abgegebenen Bewegung über eine kinematische Kette im Inneren des Säulenisolators 5 erfolgen kann und zu den relativ zueinander bewegbaren Schaltkontaktstücken des Leistungsschalters übertragen werden kann.

Das Traggestell 2 ist an einem Fundament 6 abgestützt. Das Fundament 6 ist im Erdboden verankert und dient als Widerlager. Das Traggestell 2 ist über mehrere erste und mehrere zweite Dämpfungselemente 7, 8 am Fundament 6 abgestützt. Die Dämpfungselemente 7, 8 sind entlang einer Kreisbahn angeordnet, wobei auf der Kreisbahn umlaufend aufeinander folgend jeweils ein erstes und ein zweites Dämpfungselement 7, 8 angeordnet ist. Vorzugsweise sollte die Anzahl der ersten und zweiten Dämpfungselemente 7,8 gradzahlig ausgeführt sein, so dass bei einem geschlossenen Umlauf der Bahn ein kontinuierlicher Wechsel zwischen ersten und zweiten Dämpfungselementen 7, 8 gegeben ist. Die ersten und die zweiten Dämpfungselemente 7, 8 weisen voneinander abweichende Bemessungsdämpfungsraten auf, d. h., die ersten Dämpfungselemente 7 sind mit einer gegenüber der Bemessungsdämpfungsrate der zweiten Dämpfungselemente 8 schwächeren Bemessungsdämpfungsrate ausgestattet. Mit anderen Worten, die ersten Dämpfungselemente 7 wandeln Bewegungsenergie in einem geringeren Maße in andere Energieformen, beispielsweise Wärme, als die zweiten Dämpfungselemente 8. Vorliegende weisen die ersten und zweiten Dämpfungselemente 7, 8 jeweils gleiche Bauarten auf. Im vorliegenden Ausführungsbeispiel ist die Nutzung von Drahtseilfederdämpfern vorgesehen.

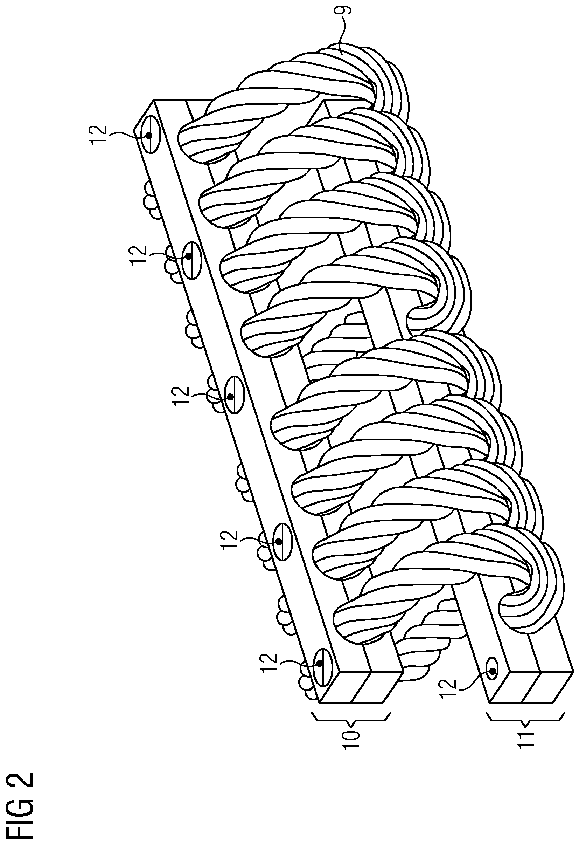

Beispielhaft ist ein Aufbau eines Drahtseilfederdämpfers in der Figur 2 dargestellt. Ein Drahtfederdämpfer weist ein mehrfach verseiltes Drahtseil 9 auf, welches unter elastischer Verformung schraubenförmig gewunden ist. Um das Drahtseil 9 schraubenförmig gewunden in Form zu halten, sind in Richtung der Wickelachse des Drahtseiles 9 ein erstes Joch 10 sowie ein zweites Joch 11 vorgesehen. Die Joche 10, 11 sind im Wesentlichen parallel zueinander ausgerichtet und liegen mantelseitig an entgegengesetzt zueinander liegende Seiten des gewickelten Drahtseiles 9. Vorliegend sind die Joche 10, 11 zweiteilig ausgeführt, wobei in einem Fügespalt der Joche 10, 11 jeweils Ausnehmungen vorgesehen sind, durch welche die Windungen des Drahtes verlaufen. Über die Joche 10, 11 sind die Windungen zueinander beabstandet, wobei ein spontanes Abwickeln der Windungen verhindert ist. Mittels Gewindebolzen 12 sind die Teilelemente der Joche 10, 11, das Drahtseil 9 in den Ausnehmungen verpressend festgelegt. Dadurch ist ein schraubenförmiger Verlauf des Drahtseiles 9 festgelegt. Die Drahtseilfedern der ersten Dämpfungselemente 7 weisen eine geringere intrinsische Dämpfung/Reibung auf, als die Drahtseilfedern der zweiten Dämpfungselemente 8.

Über die beiden Joche 10, 11 ist es möglich, einerseits das Traggestell 2 und andererseits das Fundament 6 anzuschlagen. In der Figur 1 sind dazu symbolisch Stehbolzen am Fundament 6 dargestellt, an welchem das jeweilige zweite Joch 11 der Dämpfungselemente 7, 8 festgelegt ist. Entgegengesetzt dazu, ist das erste Joch 10 mit dem Traggestell 2 verbunden. Dadurch liegt die Wickelachse der Drahtseile 9 im Wesentlichen lotrecht zu einer Gewichtskraftachse 13, mit welcher Gewichtskräfte des ruhenden Leistungsschalters 4 in das Traggestell 2 bzw. in das Fundament 6 eingeleitet werden. Die ersten und zweiten Dämpfungselemente 7, 8 dienen dabei jeweils einer schwingfähigen Lagerung der Elektroenergieübertragungseinrichtung mit dem Traggestell 2. Vorliegend ist vorgesehen, dass sowohl die ersten als auch die zweiten Dämpfungselemente 7, 8 einer Lagerung der Elektroenergieübertragungseinrichtungseinrichtung dienen. Es kann alternativ jedoch auch vorgesehen sein, dass lediglich die ersten Dämpfungselemente 7, welche die reduzierte Bemessungsdämpfungsrate aufweisen, eine Tragfunktion für die Elektroenergieübertragungseinrichtung wahrnehmen. Wohingegen die zweiten Dämpfungselemente 8, die eine größere Bemessungsdämpfungsrate aufweisen, lediglich einem Dämpfen einer Relativbewegung des Traggestelles gegenüber dem Fundament oder einem anderen Widerlager dienen können.

Die äußere Gestalt der verwendeten Dämpfungselemente 7, 8 ist unabhängig von ihrer jeweiligen Bemessungsdämpfungsrate identisch. Vorzugsweise ist jeweils eine gleichartige Anzahl von Windungen, eine gleichartige Dimensionierung der Windungen sowie eine Verwendung gleichartiger Joche 10, 11 vorgesehen. Die Dämpfungsrate wird im Wesentlichen durch die Art der Verseilung der Drähte des Drahtseiles 9 sowie deren Oberflächenbeschaffenheit, d. h., das intrinsische Reibverhalten der Drähte des Drahtseiles 9 bestimmt.

Darüber hinaus kann jedoch auch vorgesehen sein, dass über die Dimensionierung des Drahtseiles 9, Windungsanzahl, Durchmesser der Windungen usw. eine Variation von ersten und zweiten Dämpfungselementen 7, 8 vorgenommen wird.

Neben der Verwendung von gleichartigen Bauarten für die ersten und zweiten Dämpfungselemente 7, 8 können auch für die ersten und die zweiten Dämpfungselemente 7, 8 voneinander abweichende Bauarten eingesetzt werden. Beispielsweise können alternative Konstruktionen von Reibungsdämpfern, wie beispielsweise Spiralfeder, Blattfedern, Elastomerpuffer usw. Verwendung finden. Es kann jedoch auch vorgesehen sein, dass als Dämpfungselement ein hydraulischer Dämpfer oder ein pneumatischer Dämpfer nach Art einer Hydraulikfeder oder nach Art einer Gasfeder zum Einsatz kommt.

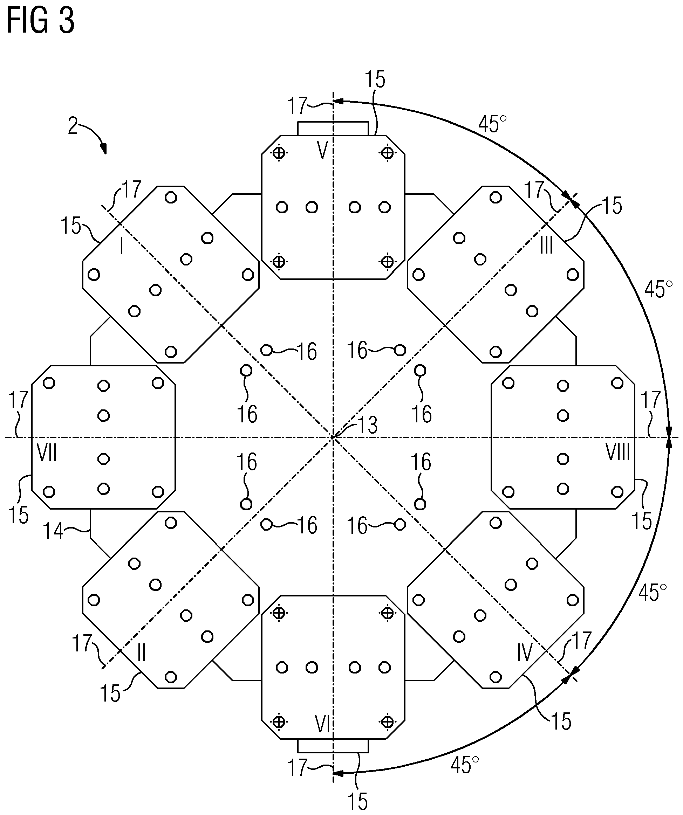

In der Figur 3 ist eine Draufsicht des Traggestelles 2 dargestellt. Das Traggestell 2 weist eine achteckige Grundplatte 14 auf, welche im Wesentlichen eben ausgeführt ist. Auf einer Kreisbahn, welche zentrisch zum Mittelpunkt der achteckigen Grundplatte 14 angeordnet ist, sind mehrere im Wesentlichen rechteckige Aufnahmeplatten 15 mit der Grundplatte 14 winkelstarr verbunden. Jeweils eine die Aufnahmeplatten 15 begrenzende Außenkante ist dabei im Wesentlichen parallel bzw. lotrecht zu einer Körperkante der sechseckigen Grundplatte 14 ausgerichtet. Die Aufnahmeplatten 15 sind dabei, die Seiten zwischen den acht Ecken der Grundplatte 14 überragend, flächig mit der Grundplatte 14 verbunden. Die Aufnahmeplatten 15 sind somit auf einer Kreisbahn/einem Polygonzug um das Zentrum der Grundplatte 14 verteilt angeordnet. Im Zentrum der Grundplatte 14 (Schnittpunkt der Mittelsenkrechten der Seiten der Grundplatte 14) sind Ausnehmungen 16 angeordnet, in welchen der Stiel 1 verbolzt werden kann, so dass die Gewichtskraftsachse 13 vorliegend lotrecht zur Zeichenebene der Figur 3 verläuft. Im Umlauf der kreisförmigen Bahn sind die Aufnahmeplatten 15 symmetrisch verteilt angeordnet, so dass die Aufnahmeplatten 15 in einem kreisförmigen Umlauf jeweils um ein Winkelmaß von 45° verschwenkt liegen. Entsprechend ergeben sich im Umlauf acht Aufnahmeplatten 15, welche der Aufnahme von vier ersten Dämpfungselementen 7 sowie vier zweiten Dämpfungselementen 8 dienen. Die Positionen der vier ersten Dämpfungselemente 7 ist mit den römischen Ziffern I, II, III und IV bezeichnet. Die Position der vier zweiten Dämpfungselemente 8 ist mit den römischen Ziffern V, VI, VII und VIII gekennzeichnet. Die als Drahtseilfederdämpfer ausgebildeten ersten und zweiten Dämpfungselemente 7, 8 sind dabei derart an dem Traggestell 2 positioniert, dass die Wickelachsen (ebenso wie die Längsachsen der Joche 10, 11) parallel zu den Seiten des Achteckes der Grundplatte 14 ausgerichtet sind. Entsprechend liegen die Wickelachsen der Drahtfedern jeweils im Wesentlichen lotrecht zu den Mittelsenkrechten 17 der Seiten der Grundplatte 14.

Bei einem Bewegen des Leistungsschalters 4 kommt es zum Übertragen einer Bewegung auf die ersten und die zweiten Dämpfungselemente 7, 8. Beide Gruppen von ersten und zweiten Dämpfungselementen 7, 8 sind an einem schwingungsfähigen Stützen des Traggestelles 2 beteiligt, wobei aufgrund der Wahl der Bemessungsdämpfungsraten zunächst zumindest im Wesentlichen lediglich die ersten Dämpfungselemente 7, d. h., die Dämpfungselemente mit der geringeren Bemessungsdämpfungsrate, bei einem Verformen eine Dämpfung der eingeleiteten Bewegung übernehmen. Wohingegen die Gruppe der zweiten Dämpfungselemente 8 zunächst noch keine (bzw. eine vergleichsweise unwesentlich geringe) Dämpfungswirkung entfalten. Erst bei einer Vergrößerung der Amplitude und/oder der Geschwindigkeit/Frequenz der Bewegung an dem Traggestell 2 relativ zum Fundament 6, wird eine zusätzliche Dämpfung parallel zur (ggf. abnehmenden) dämpfenden Wirkung der ersten Gruppe von ersten Dämpfungselementen 7 durch die Gruppe von zweiten Dämpfungselementen 8 wirksam. Somit ist sowohl bei geringen Bewegungen an der Elektroenergieübertragungseinrichtung eine leichte Dämpfung ermöglicht und bei einem Zunehmen der Amplitude der Bewegung wird diese in einem stärkeren Maße durch die zweiten Dämpfungselemente 8 gedämpft.

## Patentansprüche

1. Dämpfungsanordnung einer schwingfähig gelagerten Übertragungseinrichtung für elektrische Energie (4) mit einem Traggestell (2), welches über mehrere Dämpfungselemente (7, 8) mit zumindest einem insbesondere ortsfesten Widerlager (6) verbunden ist,
**dadurch gekennzeichnet, dass** ein erstes und ein zweites Dämpfungselement, welche voneinander abweichend bemessene Dämpfungsraten aufweisen und parallel angeordnet sind, das Traggestell mit einem Widerlager verbinden und wobei mehrere Dämpfungselemente (7, 8) längs einer Bahn verteilt angeordnet sind, wobei im Bahnverlauf erste und zweite Dämpfungselemente (7, 8) einander abwechseln.

2. Dämpfungsanordnung nach Anspruch 1,
**dadurch gekennzeichnet, dass** zumindest das erste und/oder zumindest das zweite Dämpfungselement (7,8) ein im Wesentlichen lineares Dämpfungsverhalten aufweist/aufweisen.

3. Dämpfungsanordnung nach einem der Ansprüche 1 bis 2,
**dadurch gekennzeichnet, dass** das erste und das zweite Dämpfungselement (7, 8) die gleiche Bauart aufweisen.

4. Dämpfungsanordnung nach einem der Ansprüche 1 bis 2,
**dadurch gekennzeichnet, dass** das erste und das zweite Dämpfungselement (7, 8) voneinander abweichende Bauarten aufweisen.

5. Dämpfungsanordnung nach einem der Ansprüche 1 bis 4,
**dadurch gekennzeichnet, dass** das erste und/oder das zweite Dämpfungselement (7, 8) nach Art eines Reibungsdämpfers wirkt/wirken.

6. Dämpfungsanordnung nach einem der Ansprüche 1 bis 5,
**dadurch gekennzeichnet, dass** das erste und/oder das zweite Dämpfungselement (7, 8) nach Art eines hydraulischen Dämpfers wirkt/wirken.

7. Dämpfungsanordnung nach einem der Ansprüche 1 bis 6,
**dadurch gekennzeichnet, dass** das erste und/oder das zweite Dämpfungselement (7, 8) nach Art eines pneumatischen Dämpfers wirkt/wirken.

8. Dämpfungsanordnung nach einem der Patentansprüche 1 bis 7,
**dadurch gekennzeichnet, dass** die Dämpfungselemente (7, 8) mit einer geringeren bemessenen Dämpfungsrate das Traggestell (2) abstützen.

## Claims

1. Damping arrangement for a transmission device for electrical energy (4) which is mounted such that it can oscillate and comprises a supporting frame (2), which is connected to at least one in particular stationary abutment (6) via a plurality of damping elements (7, 8),
**characterized in that**
a first and a second damping element, which have mutually differently rated damping rates and are arranged in parallel, connect the mounting frame to an abutment and wherein a plurality of damping elements (7, 8) are arranged distributed along a path, wherein first and second damping elements (7, 8) alternate with one another over the course of the path.

2. Damping arrangement according to Claim 1,
**characterized in that**
at least the first and/or at least the second damping element (7, 8) has/have a substantially linear damping behavior.

3. Damping arrangement according to one of Claims 1 to 2,
**characterized in that**
the first and second damping elements (7, 8) have the same design.

4. Damping arrangement according to one of Claims 1 to 2,
**characterized in that**
the first and second damping elements (7, 8) have different designs from one another.

5. Damping arrangement according to one of Claims 1 to 4,
**characterized in that**
the first and/or second damping element(s) (7, 8) act(s) in the manner of a friction damper.

6. Damping arrangement according to one of Claims 1 to 5,
**characterized in that**
the first and/or second damping element(s) (7, 8) act(s) in the manner of a hydraulic damper.

7. Damping arrangement according to one of Claims 1 to 6,
**characterized in that**
the first and/or second damping element(s) (7, 8) act(s) in the manner of a pneumatic damper.

8. Damping arrangement according to one of Patent Claims 1 to 7,
**characterized in that**
the damping elements (7, 8) with a lower rated damping rate support the supporting frame (2).

## Revendications

1. Agencement d'amortissement d'un dispositif de transport d'énergie ( 4 ) électrique monté de manière à pouvoir osciller, comprenant un bâti ( 2 ) support, qui est relié à au moins une culée ( 6 ), notamment à porte fixe, par plusieurs éléments ( 7, 8 ) d'amortissement,
**caractérisé en ce qu'**un premier et un deuxième éléments d'amortissement, qui ont des taux d'amortissement s'écartant l'un de l'autre et qui sont disposés parallèlement, relient le bâti support à une culée, et dans lequel plusieurs éléments ( 7, 8 ) d'amortissement sont répartis le long d'une voie, des premiers et deuxièmes éléments ( 7, 8 ) d'amortissement étant en alternance le long de la voie.

2. Agencement d'amortissement suivant la revendication 1,
**caractérisé en ce qu'**au moins le premier et/ou au moins le deuxième élément ( 7, 8 ) d'amortissement a/ont une propriété d'amortissement sensiblement linéaire.

3. Agencement d'amortissement suivant l'une des revendications 1 à 2,
**caractérisé en ce que** le premier et le deuxième éléments ( 7, 8 ) d'amortissement ont le même type de construction.

4. Agencement d'amortissement suivant l'une des revendications 1 à 2,
**caractérisé en ce que** le premier et le deuxième éléments ( 7, 8 ) d'amortissement ont des types d'amortissement se distinguant l'un de l'autre.

5. Agencement d'amortissement suivant l'une des revendications 1 à 4,
**caractérisé en ce que** le premier et le deuxième éléments ( 7, 8 ) d'amortissement agit/agissent à la manière d'un amortisseur par frottement.

6. Agencement d'amortissement suivant l'une des revendications 1 à 5,
**caractérisé en ce que** le premier et/ou le deuxième élément ( 7, 8 ) d'amortissement agit/agissent à la manière d'un amortisseur hydraulique.

7. Agencement d'amortissement suivant l'une des revendications 1 à 6,
**caractérisé en ce que** le premier et/ou le deuxième élément ( 7, 8 ) d'amortissement agit/agissent à la manière d'un amortisseur pneumatique.

8. Agencement d'amortissement suivant l'une des revendications 1 à 7,
**caractérisé en ce que** les éléments ( 7, 8 ) d'amortissement soutiennent le bâti ( 2 ) support à un taux d'amortissement assez petit.
